# EUROPEAN PATENT SPECIFICATION

(11) **EP 3 945 220 B1**
(45) Date of publication and mention of the grant of the patent: **30.04.2025**
(21) Application number: 21186588.6
(22) Date of filing: 20.07.2021
(51) Int. Cl.: F15B 15/26

(54) **LOCKING DEVICE FOR A ROD**
VERRIEGELUNGSVORRICHTUNG FÜR EINE STANGE
DISPOSITIF DE VERROUILLAGE D'UNE TIGE

(30) Priority: 29.07.2020 JP 2020128564
(43) Date of publication of application: 02.02.2022
(73) Proprietor: SMC Corporation, Tokyo 101-0021 (JP)
(72) Inventor: NEMOTO, Shinichiro, Ibaraki, 3002493 (JP)
(74) Representative: Keil & Schaafhausen Patentanwälte PartGmbB

(56) References cited:
- WO-A1-2016/080874
- JP-A- 2006 226 522
- JP-A- 2007 309 504
- US-A- 4 981 069
- US-A1- 2016 312 502

## Description

### Technical Field

The present invention relates to a locking device for rod that locks a rectilinearly movable rod, such as a piston rod of a fluid pressure cylinder, at a stop position.

### Background Art

PTL 3 discloses a locking device including a first coil spring arranged in a case with its terminal end fixed to the case and its front end in a free condition. A locked rod is inserted through the inside of the first coil spring in the state of being fastened and locked with the spring force of the coil spring. A first unlocking actuator is arranged in the case for pushing/pulling the other end of the first coil spring to the direction of opening the coil spring to unlock it.

PTL 1 and PTL 2 disclose known examples of the locking device for rod that locks a rectilinearly movable rod, such as a piston rod of a fluid pressure cylinder, at a stop position.

These locking devices are configured such that a rod is inserted through a metallic locking member (brake member) shaped like the letter U or the letter C and the locking member clamps and thereby locks the rod at a stop position. In releasing the rod, a lock-release piston of a cylinder unit pushes open the locking member, and the locking member releases the rod from the locked state.

In such locking devices, the clamping force (locking force) of the locking member may be increased, for example, by changing the material or the thickness of the locking member and thereby increasing the elastic force, or by increasing the friction force at the clamping surfaces (surfaces to be in contact with the rod) of the locking member, or by providing a mechanism to urge the locking member in a clamping direction.

It is relatively easy to increase the elastic force of the locking member or to increase the friction force of the clamping surfaces. These methods, however, are limited in the amount of locking force to be increased and may not be suitable for a rod with a large thrust force.

In addition, providing the mechanism of urging the locking member in the clamping direction complicates the structure of the locking device.

### Citation List

### Patent Literature

PTL 1: JP 2009-68567 A
PTL 2: JP 2015-110980 A
PTL 3: JP 2006 226522 A

Also US 2016/312502, JP 2007 309504 and US 4 981 069 disclose locking devices according to the prior art.

### Summary of the Invention

### Technical Problem

A problem is to provide a locking device for rod that is simple in structure and can exert a large locking force when a rod is locked.

### Solution to Problem

This problem is solved by a locking device according to claim 1. Preferred embodiments are evident from the dependent claims.

In the present invention, the lids of the locking units may be formed as the single member elongated so as to cover all the casings of the locking units, whereby the single member lid has the single release port and has all the multiple communication channels that communicate the single release port with the release pressure chambers of the multiple locking units.

It is desirable that each casing have a first end at one end in an axis direction thereof and a second end opposite to the first end, and that annular stepped recesses with the same diameter be formed concentrically with the rod at the first end and at the second end, respectively. It is also desirable that a half portion and another half portion of the connection spacer in a thickness direction of the connection spacer engage mutually opposing stepped recesses of adjacent casings, respectively.

In addition, it is desirable that the connection spacer have an annular recess that is formed at a side surface of the connection spacer so as to surround the center hole and that the recess engage a protrusion formed at a side surface of the locking member.

In the present invention, it is also desirable that a detection member be attached to the release piston so as to be detectable from outside of the lid and that a sensor that detects the detection member be attached to the lid.

In this case, it is desirable that the detection member be configured such that when the release piston is at a locked position, the detection member protrudes out of the lid and when the release piston is at an unlocked position, the detection member is withdrawn into the lid. It is also desirable that the sensor be shaped like a recess as viewed in plan and disposed so as to surround the detection member in three directions when the detection member is protruding out of the lid, and that a height of the sensor be higher than a height of the detection member when the detection member protrudes out of the lid, whereby the sensor also serves as a safety member for preventing a wrong operation on the detection member.

### Advantageous Effects of Invention

The locking device according to the present invention can provide locking force proportional to the number of the locking units. The locking force becomes far larger than that of a known locking device equipped with a single locking unit. In addition, it is easy to obtain a locking device having a required amount of locking force simply by determining the number of the locking units on the basis of the thrust force of a rod.

### Brief Description of Drawings

[Fig. 1] Fig. 1 is a plan view illustrating a first embodiment of a locking device according to the present invention.
[Fig. 2] Fig. 2 is a cross-sectional view taken along line II-II of Fig. 1 illustrating a state in which locking units lock a rod.
[Fig. 3] Fig. 3 is a cross-sectional view taken along line III-III of Fig. 2.
[Fig. 4] Fig. 4 is a cross-sectional view taken along line IV-IV of Fig. 2.
[Fig. 5] Fig. 5 is a cross-sectional view illustrating a state in which a left locking unit in Fig. 2 is switched to an unlocked state.
[Fig. 6] Fig. 6 is a cross-sectional view taken along line VI-VI of Fig. 5.
[Fig. 7] Fig. 7 is a cross-sectional view illustrating a second embodiment of a locking device according to the present invention, in which a locking device is connected directly to a fluid pressure cylinder.
[Fig. 8] Fig. 8 is a plan view illustrating a third embodiment of a locking device according to the present invention
[Fig. 9] Fig. 9 is a cross-sectional view taken along line IX-IX of Fig. 8. Description of Embodiments

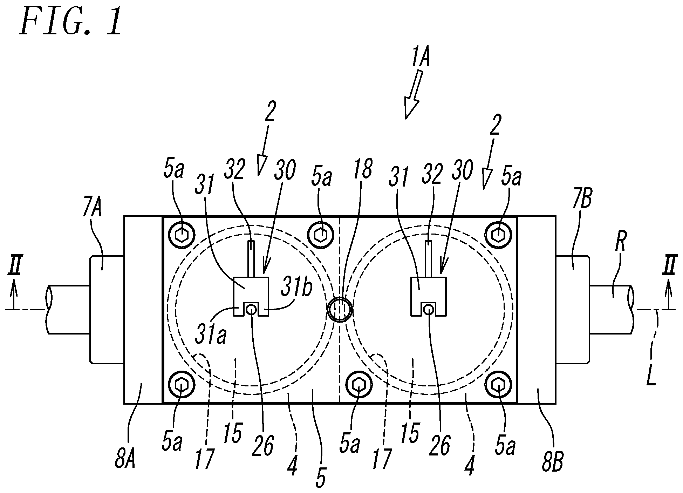

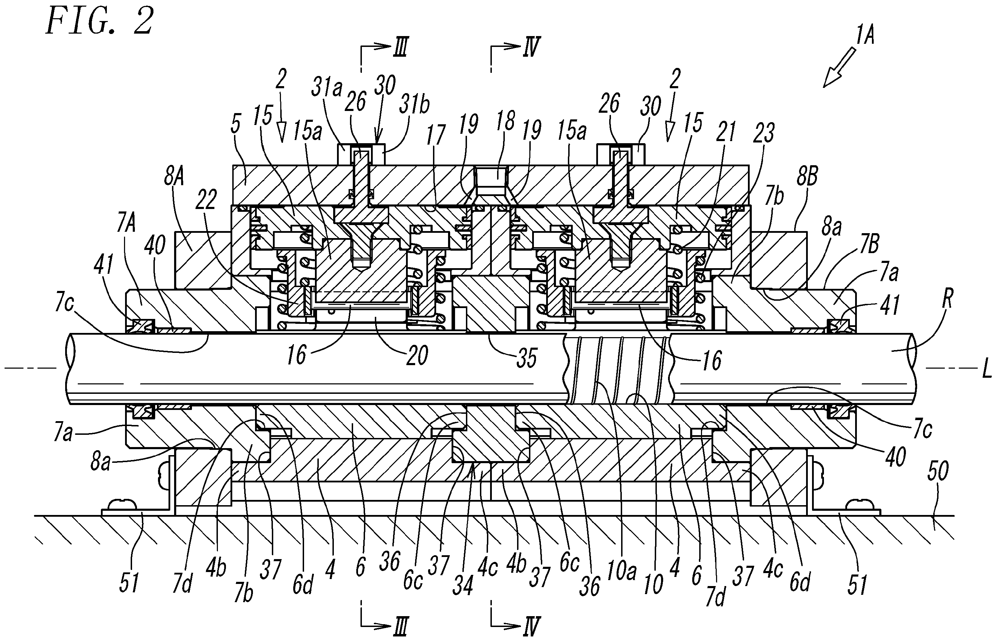

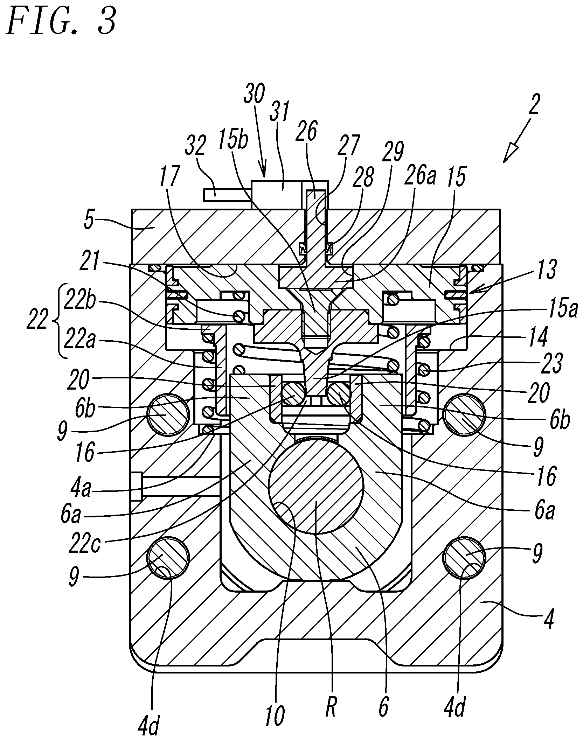

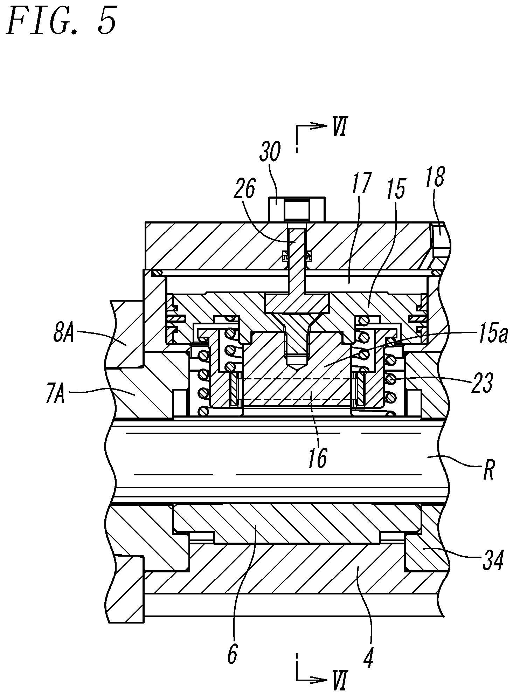

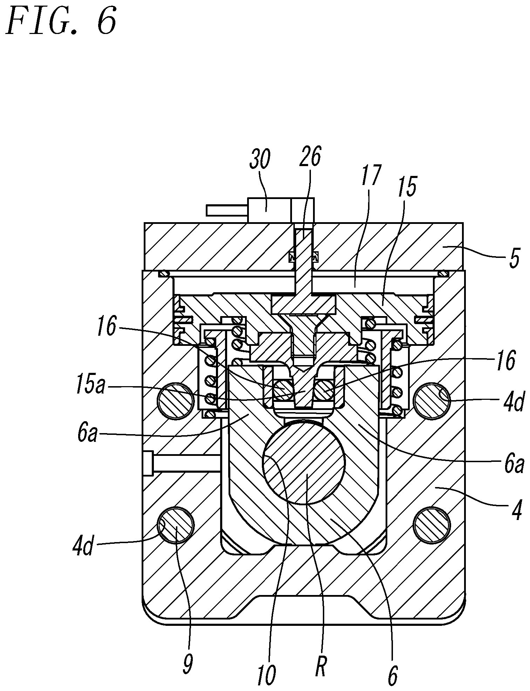

Figs. 1 to 6 illustrate a first embodiment of a locking device according to the present invention. As illustrated in Fig. 2, this locking device 1A is to be mounted, using brackets 51 or the like, on a body 50 of an apparatus, such as a fluid pressure cylinder, equipped with a rod R that moves rectilinearly in the axis L direction. The locking device 1A locks the rod R at a stop position. Figs. 2 and 3 illustrate a locked state of the locking device 1A in which a locking member 6 clamps and locks the rod R. Figs. 5 and 6 illustrate an unlocked state of the locking device 1A in which the locking member 6 releases the rod R.

As illustrated in Figs. 1 and 2, the locking device 1A has multiple locking units 2 (two locking units 2 in the illustrated example). The locking units 2 are arrayed in a row along the rod R. Collars 7A and 7B for guiding the rod are disposed at one end and the other end of the row, and holding plates 8A and 8B are also disposed at one end and the other end of the row, respectively. The locking units 2 are sandwiched between the holding plates 8A and 8B and connected with each other by multiple bolts 9 that extend from the holding plate 8A at the one end through the locking units 2 and are screwed into the holding plate 8B at the other end.

Also referring to Fig. 3, each locking unit 2 includes a metal casing 4 with the upper side being open and a metal-plate lid 5 that covers the upper side of the casing 4. The rod R passes through the casing 4.

Each locking unit 2 has an individual casing 4, whereas the lid 5 is a single member that is elongated so as to cover all of the casings 4 of the locking units 2. The single lid 5 is fixed to the multiple casings 4 with lid screws 5a.

Note that the casings 4 and the lid 5 may be made of the same metal or may be made of different metals. For example, the casings 4 are made of aluminum alloy, and the lid 5 may be made of steel.

The locking member 6 is accommodated in each casing 4. The locking member 6 is a metal member shaped like the letter U or the letter C and has a pair of locking arms 6a that opposes each other. A rod insertion hole 10 is formed in the locking member 6 at a position where the base ends of the locking arms 6a are connected. The rod R is inserted through the rod insertion hole 10.

A pair of the locking arms 6a of the locking member 6 are self-urged in directions to get closer to each other, which causes the locking arms 6a to clamp the rod R from both sides and thereby lock the rod R as illustrated in Figs. 2 and 3.

As illustrated in the right locking unit 2 of Fig. 2, a spiral groove 10a is formed at the inside surface of the rod insertion hole 10. The spiral groove 10a serves as a path for discharging abrasion material or grease or the like adhered to the inside surface of the rod insertion hole 10 or to the outside surface of the rod R, thereby allowing them to escape.

A lock-release mechanism 13 is also formed inside each casing 4. The lock-release mechanism 13 serves to displace the locking member 6 from a locked position for clamping the rod R (see Figs. 2 and 3) to an unlocked position for releasing the rod R (see Figs. 5 and 6). The lock-release mechanism 13 has a piston chamber 14 formed between the casing 4 and the lid 5. The lock-release mechanism 13 includes a release piston 15 that is accommodated inside the piston chamber 14 so as to be movable in the up-down direction. The lock-release mechanism 13 also includes a wedge-like action portion 15a formed as part of the release piston 15 and a pair of needle rollers 16 that can be displaced so as to get closer to or get further away from each other. A release pressure chamber 17 is formed inside the piston chamber 14 between the upper surface of the release piston 15 and the lower surface of the lid 5. The release pressure chamber 17 communicates, through a communication channel 19 formed inside the lid 5, with a single release port 18 formed at a central portion of the upper surface of the lid 5.

The release port 18 is formed where the release pressure chambers 17 of the adjacent locking units 2 are closest to each other. Accordingly, the two adjacent release pressure chambers 17 can communicate with the release port 18 through the shortest communication channels 19.

In addition, the single release port 18 supplies a pressurized fluid to multiple release pressure chambers 17 using a single pipe connected to the release port 18, which can make the piping simple.

As can be seen in Fig. 3, the action portion 15a of the release piston 15 is formed of a member that is shaped so as to have decreasing thickness toward the lower end (tip end) thereof. The action portion 15a is joined, using a connection screw 15b, to a central portion of the release piston 15 at the lower surface thereof. The lower end of the action portion 15a enters between a pair of the needle rollers 16. One side surface of the action portion 15a is thereby brought into contact with one needle roller 16, and the other side surface thereof is brought into contact with the other needle roller 16. The release piston 15 and the action portion 15a are made of a metal. The needle rollers 16 are also made of a metal.

Subsequently, in the state illustrated in Figs. 2 and 3, a pressurized fluid, such as compressed air, is supplied through the release port 18 to the release pressure chamber 17, which thereby lowers the release piston 15. As a result, as illustrated in Figs. 5 and 6, the wedge-like action portion 15a pushes open a pair of the needle rollers 16 in right-left directions, and the needle rollers 16 push open a pair of the locking arms 6a of the locking member 6 in the right-left directions. Thus, the locking arms 6a release the rod R. As a result, the rod R becomes displaceable in the axis L direction. Accordingly, the position to which the release piston 15 is lowered is referred to as a lock-release position (unlocked position) of the release piston 15.

Members denoted by reference sign 20 are metallic roller-support bearings that are fixed to the inside surfaces of respective upper end portions of the locking arms 6a. The roller-support bearings 20 are provided to prevent the locking arms 6a from being damaged or worn down due to contact with the needle rollers 16.

A recovery spring 21 that urges the release piston 15 upward is disposed between the lower surface of the release piston 15 and the upper surface of the locking member 6. The recovery spring 21 raises the release piston 15 to the locked position as illustrated in Fig. 3 when the pressurized fluid is discharged from the release pressure chamber 17 in the state in which the pressurized fluid is supplied to the release pressure chamber 17 and the release piston 15 is lowered to the lock-release position as illustrated in Fig. 6. As a result, a pair of the needle rollers 16 cease to push open the locking arms 6a, and the locking member 6 returns to the locked position by itself and the locking arms 6a lock the rod R.

The two locking units 2 do the same operation simultaneously. Accordingly, when the locking device 1A locks the rod R, the locking force is twice as large as that of a locking device equipped with only one locking unit 2.

A pair of the needle rollers 16 are supported by a roller holder 22. The roller holder 22 includes a cylindrically shaped trunk portion 22a and a flange 22b formed circumferentially around the upper end of the trunk portion 22a. The roller holder 22 is disposed inside the casing 4 concentrically with the release piston 15 at a position below the release piston 15. Upper end portions 6b of respective locking arms 6a are fitted in the trunk portion 22a, and the needle rollers 16 are disposed between the upper end portions 6b. Horizontally elongated support holes 22c are formed at opposing positions in the circumferential wall of the trunk portion 22a, and one end portions and the other end portions of the needle rollers 16 are fitted in the respective support holes 22c so as to be able to move laterally in the support holes 22c. The width of the upper end portion 6b of each locking arm 6a in the axis L direction is smaller than the width of any other part of the locking arm 6a.

Moreover, the roller holder 22 is also displaceable in the up-down direction, and a compression spring 23 is disposed between the flange 22b and a stepped portion 4a formed at the casing 4. Since the roller holder 22 is movable in the up-down direction, the needle rollers 16 are slightly lowered together with the roller holder 22 when the release piston 15 is lowered and the action portion 15a pushes open a pair of the needle rollers 16 as illustrated in Fig. 6. This enables the needle rollers 16 to rotate readily and push open the locking arms 6a easily.

Note that when the release piston 15 is raised to the locked position, the compression spring 23 pushes the roller holder 22 upward to the initial position illustrated in Fig. 3.

A pin-like detection member 26 is attached to the upper surface of the release piston 15 at the center thereof. The detection member 26 is slidably inserted into a detection hole 27 formed in the lid 5 with a sealing member 28 interposed therebetween. The detection member 26 is configured such that the end of the detection member 26 protrudes above, and also withdraws from, the upper surface of the lid 5 as the release piston 15 moves up and down. The base end of the detection member 26 is a mounting portion 26a shaped like a disc. The mounting portion 26a engages a recess 29 formed at the upper surface of the release piston 15, and the detection member 26 is thereby fixed to the release piston 15.

A sensor 30 for detecting the detection member 26 is disposed at the upper surface of the lid 5. The sensor 30 is a transmission-type photoelectric sensor that includes a sensor head 31 having a phototransmitter 31a and a photodetector 31b and also includes a lead 32 through which detection signals are sent to a control unit (not illustrated). Detection light is emitted by the phototransmitter 31a to the photodetector 31b, and the sensor 30 detects the presence of the detection member 26 on the basis of the amount of light received by the photodetector 31b. In other words, when the release piston 15 is raised and present at the locked position, the detection member 26 protrudes above the upper surface of the lid 5 and blocks the detection light. Due to the photodetector 31b receiving a less amount of light, the sensor 30 detects that the locking unit 2 is in the locked state. On the other hand, when the release piston 15 is lowered and present at the lock-release position, the detection member 26 is also lowered into the inside of the lid 5. Due to the photodetector 31b receiving an increased amount of light, the sensor 30 detects that the locking unit 2 is in the unlocked state.

The sensor 30, however, may be a reflection-type photoelectric sensor. In this case, the phototransmitter and the photodetector are disposed side by side in the sensor head 31, and the phototransmitter emits detection light toward the detection member 26. The photodetector receives the light reflected by the detection member 26. The reflected light is converted to an electrical signal, and the electrical signal is output to the lead. When the release piston 15 is raised and present at the locked position, the detection member 26 protrudes above the upper surface of the lid 5 and reflects the detection light. The sensor 30 thereby detects that the locking unit 2 is in the locked state. On the other hand, when the release piston 15 is lowered and present at the lock-release position, the detection member 26 is also lowered into the inside of the lid 5. In this case, the detection member 26 does not reflect the detection light from the phototransmitter. The sensor 30 thereby detects that the locking unit 2 is in the unlocked state.

The sensor head 31 of the sensor 30 is shaped like a recess as viewed in plan so as to surround the detection member 26 in three directions. The height of the sensor head 31 is higher than the height of the detection member 26 when the detection member 26 protrudes above the lid 5. This prevents the detection member 26 from being pressed by a finger or a tool by mistake and from being switched to the unlocked state. Accordingly, the sensor 30 also serves as a safety member for preventing a wrong operation on the locking unit 2.

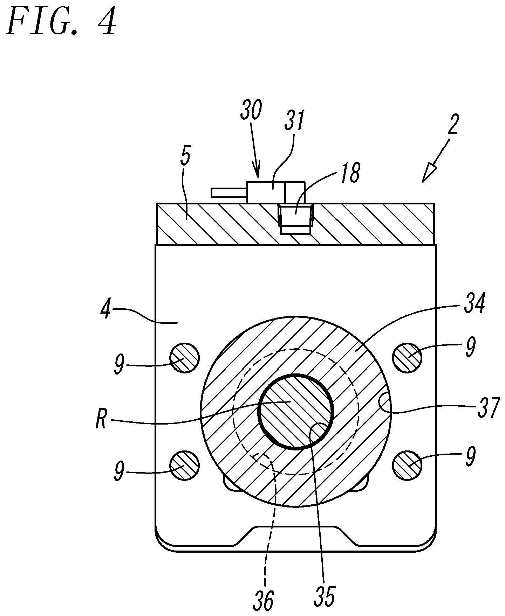

A ring-shaped connection spacer 34 connects one and another locking units 2 with each other. As illustrated in Figs. 2 and 4, the connection spacer 34 has a center hole 35 through which the rod R is inserted. The connection spacer 34 has one side surface and the other side surface in the thickness direction (in the axis L direction), and annular recesses 36 are formed concentrically with the center hole 35 at the one and the other side surfaces, respectively. The inside diameter of the center hole 35 is slightly larger than the outside diameter of the rod R. The recesses 36 at the one and the other side surfaces have the same diameter and depth.

Annular stepped recesses 37 are formed, in the casing 4 of each locking unit 2, respectively at a first end 4b and a second end 4c of the casing 4 that are opposite to each other in the axis L direction. The stepped recesses 37 have the same diameter and are disposed concentrically with each other and also with the rod R. The stepped recesses 37 at the first end 4b and the second end 4c have the same depth, which is equal to a half of the thickness of the connection spacer 34.

The casings 4 of adjacent locking units 2 are disposed such that the first end 4b of one casing 4 opposes the second end 4c of the other casing 4. One half portion and the other half portion of the connection spacer 34 in the thickness direction are fitted in respective stepped recesses 37 that oppose the connection spacer 34.

Protrusions 6c are formed at respective side surfaces of the locking member 6. A protrusion 6c engages a corresponding recess 36 of a connection spacer 34. Thus, the connection spacer 34 supports an end portion of the locking member 6.

The connection spacer 34 enables adjacent casings 4 to be positioned accurately with respect to each other and also to the rod R. Accordingly, multiple locking units 2 can be connected easily with high accuracy.

Each of the collars 7A and 7B has a body 7a shaped cylindrically, a ring-like engagement portion 7b formed at an end of the body 7a, a guide hole 7c through which the rod R is inserted, and a recess 7d formed so as to surround the guide hole 7c. The outside diameter of the engagement portion 7b is the same as the outside diameter of the connection spacer 34. A bushing 40 and a rod packing 41 are disposed inside the guide hole 7c so as to come into contact with the circumferential surface of the rod R. The engagement portion 7b of the collar 7A engages the stepped recess 37 of the first end 4b of the locking unit 2 disposed near the one end (left side in Fig. 2) of the locking device 1A. The engagement portion 7b of the collar 7B engages the stepped recess 37 of the second end 4c of the locking unit 2 disposed near the other end (right side in Fig. 2) of the locking device 1A. Protrusions 6d formed at the side surfaces of the locking members 6 are fitted in the corresponding recesses 7d of the collars 7A and 7B.

The holding plates 8A and 8B are rectangularly shaped plates that are disposed at the one and the other ends of the locking device 1A, respectively. The holding plates 8A and 8B have respective lead-out holes 8a through which the bodies 7a of the collars 7A and 7B pass outward.

The holding plate 8A disposed at the one end (left side in Fig. 2) of the locking device 1A has throughholes through which the bolts 9 are inserted and counterbores for accommodating the heads of the bolts 9 each having a hexagonal hole. The number of the throughholes and the counterbores are the same as that of the bolts 9. The holding plate 8B disposed at the other end (right side in Fig. 2) of the locking device 1A has screw holes for receiving the male threads formed at respective ends of the bolts 9. The number of the screw holes are the same as that of the bolts 9.

Multiple casings 4 are connected with each other with the bolts 9 that are inserted from the holding plate 8A through throughholes 4d formed in the casing 4 of each locking unit 2 and screwed into the screw holes formed at the holding plate 8B.

The connection structure using the bolts 9 is generally known, and detailed illustration thereof is omitted.

The single lid 5 is fixed, using lid screws 5a, onto the upper side of the casings 4 that are connected with each other as described above. Thus, the locking device 1A is formed.

The lid 5 is detachable from the multiple casings 4, and the number of the locking units 2 can be increased or decreased. When changing the number of locking units 2, the lid 5 and the bolts 9 are replaced with ones having a length that fits the number of the locking units 2.

Note that the brackets 51 for fixing the locking device 1A to the body of an apparatus are attached to the holding plates 8A and 8B.

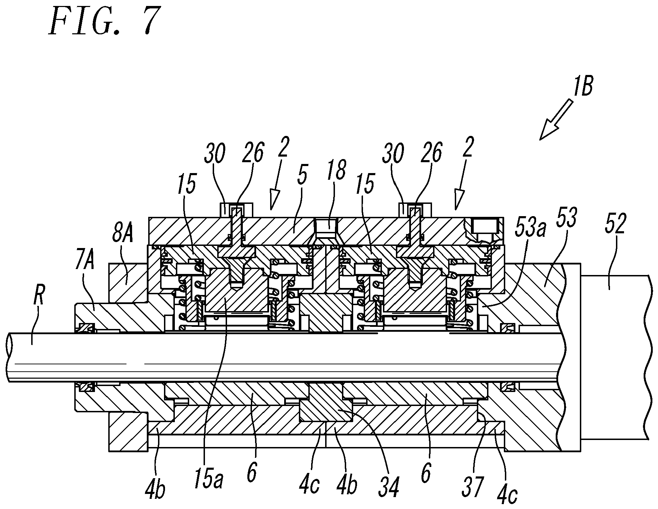

As a second embodiment of the locking device 1A, Fig. 7 illustrates a locking device 1B that is connected directly to a fluid pressure cylinder 52. In the locking device 1B according to the second embodiment, the holding plate 8B and the collar 7B attached to the right end of the locking device 1A of the first embodiment are removed. Instead, an engagement portion 53a formed at a rod cover 53 of the fluid pressure cylinder 52 is fitted in the stepped recess 37 of the second end 4c of the right locking unit 2. The male threads formed at the ends of the bolts 9 (see Fig. 3) are screwed into screw holes formed in the rod cover 53, and the locking device 1B is thereby attached to the rod cover 53. In this case, it is not necessary to use the brackets 51 that are used for the locking device 1A of the first embodiment.

Other configurations and advantageous effects of the locking device 1B are substantially the same as those of the locking device 1A of the first embodiment. Major elements of the locking device 1B are the same as those of the locking device 1A and are denoted by the same reference signs, and detailed descriptions thereof are omitted.

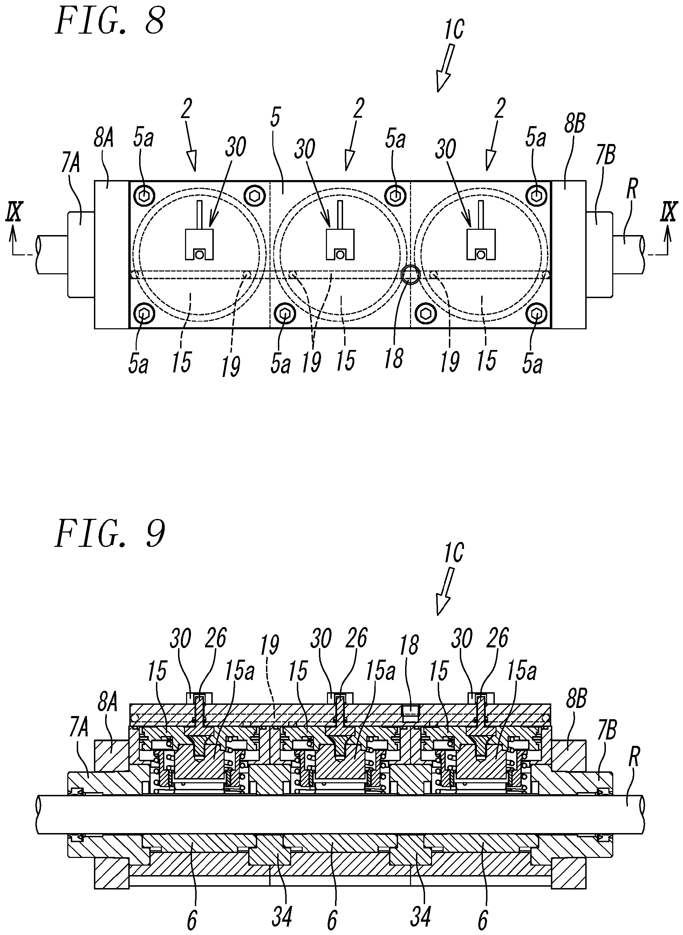

Figs. 8 and 9 illustrate a locking device 1C according to a third embodiment. The locking device 1C is different from the locking device 1A of the first embodiment in that the locking device 1C has three locking units 2. The structure of each locking unit 2 and the configuration of connection, however, are the same as those of the locking unit 2 of the locking device 1A. Major elements of the locking device 1C are the same as those of the locking device 1A and are denoted by the same reference signs, and the descriptions thereof are omitted.

The locking force of the locking device 1C of the third embodiment is 1.5 times as large as that of the locking device 1A of the first embodiment and 3 times as large as that of a locking device equipped with only one locking unit 2.

Note that although the single lid 5 is attached to multiple locking units 2 of each of the locking devices 1A, 1B, and 1C of the above embodiments, separate lids 5 may be provided for different locking units 2. In this case, the release port 18 is formed at each one of the lids 5.

As described above, the locking device according to the present invention can provide the locking force proportional to the number of the locking units 2. The locking force becomes far larger than that of a known locking device equipped with only one locking unit. In addition, it is easy to obtain a locking device having a required amount of locking force simply by determining the number of the locking units 2 on the basis of the thrust force of a rod in the design phase.

### Reference Signs List

- 1A, 1B, 1C: locking device
- 2: locking unit
- 4: casing
- 4b: first end
- 4c: second end
- 5: lid
- 6: locking member
- 6c: protrusion
- 15: release piston
- 17: release pressure chamber
- 18: release port
- 19: communication channel
- 26: detection member
- 30: sensor
- 34: connection spacer
- 35: center hole
- 36: recess
- 37: stepped recess

## Claims

1. A locking device for a rod, that is configured to lock a rod (R) movable rectilinearly in an axis (L) direction at a stop position, the locking device (1A, 1B, 1C) comprising:
multiple locking units (2) that are configured to be arrayed along the rod (R) and connected to each other, wherein
the locking units (2) each have an individual casing (4) through which the rod (R) is insertable and a lid (5) that covers the casing (4), the casing (4) accommodates a locking member (6) that is configured to clamp and thereby lock the rod (R) and a release piston (15) that is configured to unlock the locking member (6) by receiving fluid pressure,
a release pressure chamber (17) is formed between the casings (4) and the lid (5) so as to apply the fluid pressure to the release piston (15);
wherein the lids (5) of the locking units
- are formed as a single member lid elongated so as to cover all the casings (4) of the locking units
or
- are alternatively provided as separate lids for the different locking units;
wherein
- a single release port (18) that is configured to supply and discharge a pressurized fluid and communication channels (19) that communicate the release port (18) with the respective release pressure chambers (17) are formed in the single member lid (5)
or
- alternatively a release port (18) that is configured to supply and discharge a pressurized fluid and a communication channel (19) that communicates the release port (18) with the release pressure chamber (17) are formed at each one of the separate lids (5);
and wherein
a ring-like connection spacer (34) is disposed between the casings (4) of adjacent locking units (2) and is configured to be concentric with the rod (R), the connection spacer (34) connects the casings (4) of the adjacent locking units (2) with each other, and
the rod (R) is insertable through a center hole (35) of the connection spacer (34).

2. The locking device for a rod according to Claim 1, wherein
the lids (5) of the locking units are formed as the single member elongated so as to cover all the casings (4) of the locking units (2), and
the single member lid (5) has the single release port (18) and has all the multiple communication channels (19) that communicate the single release port (18) with the release pressure chambers (17) of the multiple locking units (2).

3. The locking device for a rod according to Claims 1 or 2, wherein
each casing (4) has a first end (4b) at one end in an axis direction thereof and a second end (4c) opposite to the first end (4b), and annular stepped recesses (37) with the same diameter are formed at the first end (4b) and at the second end (4c), respectively, the annular stepped recesses (37) being configured to be concentric with the rod (R), and
a half portion and another half portion of the connection spacer (34) in a thickness direction of the connection spacer (34) engage mutually opposing stepped recesses (37) of adjacent casings (4), respectively.

4. The locking device for a rod according to any one of Claims 1 to 3 , wherein
the connection spacer (34) has an annular recess (36) that is formed at a side surface of the connection spacer (34) so as to surround the center hole (35), and
the recess (36) engages a protrusion (6c) formed at a side surface of the locking member (6).

5. The locking device for a rod according to any one of Claims 1 to 4, wherein
a detection member (26) is attached to the release piston (15) so as to be detectable from outside of the lid (5), and
a sensor (30) that detects the detection member (26) is attached to the lid (5).

6. The locking device for a rod according to Claim 5, wherein
the detection member (26) is configured such that
when the release piston (15) is at a locked position, the detection member (26) protrudes out of the lid (5), and
when the release piston (15) is at an unlocked position, the detection member (26) is withdrawn into the lid (5),
the sensor (30) is shaped like a recess as viewed in plan and disposed so as to surround the detection member (26) in three directions when the detection member is protruding out of the lid (5), and
a height of the sensor (30) is higher than a height of the detection member (26) when the detection member (26) protrudes out of the lid (5), whereby the sensor (30) is configured also to serve as a safety member for preventing a wrong operation on the locking unit (2).

## Patentansprüche

1. Verriegelungsvorrichtung für eine Stange, die so konfiguriert ist, dass sie eine Stange (R), die geradlinig in einer Richtung der Achse (L) beweglich ist, in einer Stopp-Position verriegelt, wobei die Verriegelungsvorrichtung (1A, 1B, 1C) Folgendes umfasst:
mehrere Verriegelungseinheiten (2), die so konfiguriert sind, dass sie entlang der Stange (R) angeordnet und miteinander verbunden werden können, wobei
die Verriegelungseinheiten (2) jeweils ein individuelles Gehäuse (4), durch das die Stange (R) eingeführt werden kann, und einen Deckel (5) aufweisen, der das Gehäuse (4) abdeckt, wobei das Gehäuse (4) ein Verriegelungselement (6) aufnimmt, das so konfiguriert ist, dass es die Stange (R) festklemmt und dadurch verriegelt, und einen Freigabekolben (15), der so konfiguriert ist, dass er das Verriegelungselement (6) durch die Aufnahme von Fluiddruck freigibt,
wobei eine Freigabedruckkammer (17) zwischen den Gehäusen (4) und dem Deckel (5) ausgebildet ist, um den Fluiddruck auf den Freigabekolben (15) auszuüben,
wobei die Deckel (5) der Verriegelungseinheiten
- als ein Einzelelement ausgebildet sind, das länglich ist, um alle Gehäuse (4) der Verriegelungseinheiten abzudecken,
- oder alternativ als separate Deckel für die unterschiedlichen Verriegelungseinheiten vorgesehen sind,
wobei
- eine einzelne Freigabeöffnung (18), die dazu ausgestaltet ist, ein unter Druck stehendes Fluid zuzuführen und abzuführen, und Verbindungskanäle (19), welche die Freigabeöffnung (18) mit den jeweiligen Freigabedruckkammern (17) verbinden, in dem einzelnen Deckel (5) ausgebildet sind, oder
- wobei alternativ eine Freigabeöffnung (18), die dazu ausgestaltet ist, ein unter Druck stehendes Fluid zuzuführen und abzuführen, und ein Verbindungskanal (19), welcher die Freigabeöffnung (18) mit der Freigabedruckkammer (17) verbindet, in jedem separaten Deckel (5) ausgebildet sind,
und wobei ein ringförmiges Verbindungsdistanzstück (34) zwischen den Gehäusen (4) benachbarter Verriegelungseinheiten (2) angeordnet und so konfiguriert ist, dass es konzentrisch zur Stange (R) ist,
wobei das Verbindungsdistanzstück (34) die Gehäuse (4) der benachbarten Verriegelungseinheiten (2) miteinander verbindet, und
die Stange (R) durch ein Mittelloch (35) des Verbindungsdistanzstücks (34) einführbar ist.

2. Verriegelungsvorrichtung für eine Stange gemäß Anspruch 1, wobei
der Deckel (5) der Verriegelungseinheiten aus einem einzelnen Element geformt ist, das so verlängert ist, dass es alle Gehäuse (4) der Verriegelungseinheiten (2) abdeckt, und
der als einzelnes Element geformte Deckel (5) die einzelne Freigabeöffnung (18) und alle der mehreren Verbindungskanäle (19) aufweist, die die einzelne Freigabeöffnung (18) mit den Freigabedruckkammern (17) der mehreren Verriegelungseinheiten (2) verbinden.

3. Verriegelungsvorrichtung für eine Stange gemäß Anspruch 1 oder 2, wobei
jedes Gehäuse (4) ein erstes Ende (4b) an einem Ende in einer Achsrichtung davon und ein zweites Ende (4c) gegenüber dem ersten Ende (4b) aufweist und ringförmige abgestufte Aussparungen (37) mit demselben Durchmesser an dem ersten Ende (4b) bzw. an dem zweiten Ende (4c) ausgebildet sind, wobei die ringförmigen abgestuften Aussparungen (37) so konfiguriert sind, dass sie konzentrisch zu der Stange (R) sind, und
ein halber Abschnitt und ein weiterer halber Abschnitt des Verbindungsdistanzstücks (34) in einer Dickenrichtung des Verbindungsdistanzstücks (34) jeweils in einander gegenüberliegende gestufte Ausnehmungen (37) benachbarter Gehäuse (4) eingreifen.

4. Verriegelungsvorrichtung für eine Stange gemäß einem der Ansprüche 1 bis 3, wobei
das Verbindungsdistanzstück (34) eine ringförmige Aussparung (36) aufweist, die an einer Seitenfläche des Verbindungsdistanzstücks (34) so ausgebildet ist, dass sie das Mittelloch (35) umgibt, und
die Aussparung (36) mit einem Vorsprung (6c) in Eingriff steht, der an einer Seitenfläche des Verriegelungselements (6) ausgebildet ist.

5. Die Verriegelungsvorrichtung für eine Stange gemäß einem der Ansprüche 1 bis 4, wobei
ein Erfassungselement (26) an dem Freigabekolben (15) angebracht ist, so dass es von außerhalb des Deckels (5) erfassbar ist, und
ein Sensor (30), der das Erfassungselement (26) erfasst, an dem Deckel (5) angebracht ist.

6. Verriegelungsvorrichtung für eine Stange nach Anspruch 5, wobei
das Erfassungselement (26) so konfiguriert ist, dass
das Erfassungselement (26) aus dem Deckel (5) herausragt, wenn sich der Freigabekolben (15) in einer verriegelten Position befindet, und
das Erfassungselement (26) in den Deckel (5) zurückgezogen ist, wenn sich der Freigabekolben (15) in einer entriegelten Position befindet,
der Sensor (30) in der Draufsicht wie eine Aussparung geformt und so angeordnet ist, dass er das Erfassungselement (26) in drei Richtungen umgibt, wenn Erfassungselement (26) aus dem Deckel (5) herausragt, und
die Höhe des Sensors (30) größer ist als die Höhe des Erfassungselements (26), wenn das Erfassungselement (26) aus dem Deckel (5) herausragt, wobei der Sensor (30) auch so konfiguriert ist, dass er als Sicherheitselement dient, um eine Fehlbedienung der Verriegelungseinheit (2) zu verhindern.

## Revendications

1. Dispositif de verrouillage pour une tige, lequel est configuré pour verrouiller une tige (R) déplaçable de façon rectiligne dans une direction d'axe (L) à une position d'arrêt, le dispositif de verrouillage (1A, 1B, 1C) comprenant :
des unités de verrouillage (2) multiples configurées pour être disposées en réseau le long de la tige (R) et reliées les unes aux autres, dans lequel
les unités de verrouillage (2) possèdent respectivement un boîtier individuel (4) à travers lequel la tige (R) peut être insérée et un couvercle (5) recouvrant le boîtier (4), le boîtier (4) accueille un élément de verrouillage (6) configuré pour serrer et ainsi verrouiller la tige (R), ainsi qu'un piston de déblocage (15) configuré pour déverrouiller l'élément de verrouillage (6) en recevant une pression fluidique,
une chambre de pression de déblocage (17) est formée entre les boîtiers (4) et le couvercle (5) de manière à appliquer la pression fluidique au piston de déblocage (15) ;
dans lequel les couvercles (5) des unités de verrouillage
- sont formés comme un couvercle d'élément unique allongé de manière à recouvrir tous les boîtiers (4) des unités de verrouillage
ou
- sont disposés en alternance comme des couvercles séparés pour les différentes unités de verrouillage ;
dans lequel
- un orifice de déblocage (18) unique configuré pour alimenter et décharger un fluide sous pression et des canaux de communication (19) faisant communiquer l'orifice de déblocage (18) avec les chambres de pression de déblocage (17) respectives sont formés dans l'élément de couvercle (5) unique
ou
- alternativement, un orifice de déblocage (18) configuré pour alimenter et décharger un fluide sous pression et un canal de communication (19) faisant communiquer l'orifice de déblocage (18) avec la chambre de pression de déblocage (17) sont formés au niveau de chacun des couvercles (5) séparés ;
et dans lequel
un espaceur de liaison du genre anneau (34) est disposé entre les boîtiers (4) d'unités de verrouillage (2) adjacentes et configuré pour être concentrique avec la tige (R), l'espaceur de liaison (34) relie les boîtiers (4) des unités de verrouillage (2) adjacentes les uns aux autres, et
la tige (R) peut être insérée à travers un trou central (35) de l'espaceur de liaison (34).

2. Dispositif de verrouillage pour une tige selon la revendication 1, dans lequel
les couvercles (5) des unités de verrouillage sont formés comme l'unique élément allongé de manière à recouvrir tous les boîtiers (4) des unités de verrouillage (2), et
le couvercle d'élément (5) unique comporte l'orifice de déblocage (18) unique et comporte tous les canaux de communication (19) multiples faisant communiquer l'orifice de déblocage (18) unique avec les chambres de pression de déblocage (17) des unités de verrouillage (2) multiples.

3. Dispositif de verrouillage pour une tige selon les revendications 1 ou 2, dans lequel
chaque boîtier (4) comporte une première extrémité (4b) à une extrémité dans une direction axiale de celui-ci et une deuxième extrémité (4c) opposée à la première extrémité (4b), et des creux étagés de façon annulaire (37) avec le même diamètre sont formés à la première extrémité (4b) et à la deuxième extrémité (4c), respectivement, les creux étagés de façon annulaire (37) étant configurés pour être concentriques avec la tige (R), et
une demi-portion et une autre demi-portion de l'espaceur de liaison (34) dans une direction d'épaisseur de l'espaceur de liaison (34) engagent des creux étagés (37) mutuellement opposés de boîtiers (4) adjacents, respectivement.

4. Dispositif de verrouillage pour une tige selon l'une quelconque des revendications 1 à 3, dans lequel
l'espaceur de liaison (34) comporte un creux annulaire (36) formé au niveau d'une surface latérale de l'espaceur de liaison (34) de manière à entourer le trou central (35), et
le creux (36) engage une saillie (6c) formée au niveau d'une surface latérale de l'élément de verrouillage (6).

5. Dispositif de verrouillage pour une tige selon l'une quelconque des revendications 1 à 4, dans lequel
un élément de détection (26) est fixé au piston de déblocage (15) de manière à être détectable depuis l'extérieur du couvercle (5), et
un capteur (30) détectant l'élément de détection (26) est fixé au couvercle (5).

6. Dispositif de verrouillage pour une tige selon la revendication 5, dans lequel
l'élément de détection (26) est configuré de telle façon que
lorsque le piston de déblocage (15) est à la position verrouillée, l'élément de détection (26) fait saillie hors du couvercle (5), et
lorsque le piston de déblocage (15) est à une position déverrouillée, l'élément de détection (26) est retiré dans le couvercle (5),
le capteur (30) est formé comme un creux dans une vue en plan et disposé de manière à entourer l'élément de détection (26) dans trois directions lorsque l'élément de détection fait saillie hors du couvercle (5),
une hauteur du capteur (30) est plus élevée qu'une hauteur de l'élément de détection (26) lorsque l'élément de détection (26) fait saillie hors du couvercle (5), moyennant quoi le capteur (30) est configuré également pour servir d'élément de sécurité pour empêcher une fausse manipulation sur l'unité de verrouillage (2).
